# EUROPEAN PATENT APPLICATION

(11) **EP 4 697 206 A1**
(43) Date of publication of application: **18.02.2026**
(21) Application number: 24829861.4
(22) Date of filing: 22.02.2024
(51) Int. Cl.: G06F 17/15, G06N 3/0464

(54) **COMPUTING CORE AND DATA PROCESSING METHOD**

(30) Priority: 30.06.2023 CN 202310798201
(71) Applicant: Huawei Technologies Co., Ltd., Shenzhen, Guangdong 518129 (CN)
(72) Inventor: FAN, Tuanbao, Shenzhen, Guangdong 518129 (CN); JIANG, Yuexing, Shenzhen, Guangdong 518129 (CN); WANG, Yang, Shenzhen, Guangdong 518129 (CN); SHI, Xiaoshan, Shenzhen, Guangdong 518129 (CN); LIU, Yu, Shenzhen, Guangdong 518129 (CN)
(74) Representative: Gill Jennings & Every LLP
(86) International application number: PCT/CN2024/078172
(87) International publication number: WO 2025/001203

(57) **Abstract**

Embodiments of this application relate to the field of chip technologies, and provide a computing core and a data processing method, to resolve problems of low computing resource utilization and high hardware costs of an existing in-memory computing apparatus. A specific solution is as follows: The computing core includes a plurality of convolution circuits (81) and a plurality of multiplexers (82). The multiplexer (82) includes an output end and at least two input ends. The output end of the multiplexer (82) is in a one-to-one correspondence with an input end of the convolution circuit (81). An output end of each of the plurality of convolution circuits (81) is coupled to input ends of L multiplexers (82), where L is an integer greater than or equal to 2. At least one of the L multiplexers (82) further includes an external data output end. At least one of L convolution circuits (81) corresponding to the L multiplexers (82) further includes an external data input end. The multiplexer (82) is configured to connect an output end of at least one convolution circuit (81) coupled to the multiplexer (82) to the output end of the multiplexer (82).

## Description

This application claims priority to Chinese Patent Application No. 202310798201.X, filed with the China National Intellectual Property Administration on June 30, 2023, and entitled "COMPUTING CORE AND DATA PROCESSING METHOD", which is incorporated herein by reference in its entirety.

### TECHNICAL FIELD

Embodiments of this application relate to the field of chip technologies, and in particular, to a computing core and a data processing method.

### BACKGROUND

With development of artificial intelligence (artificial intelligence, AI) technologies, an increasing quantity of artificial intelligence products enter people's lives, providing various intelligent services for people.

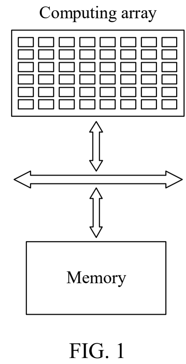

The core of the artificial intelligence technology includes two aspects: a neural network algorithm and a processor that provides massive hardware computing power. With upgrade and iteration of a deep learning neural network algorithm, especially emergence of algorithms such as the chat generative pre-trained transformer (chat generative pre-trained transformer, ChatGTP) and the transformer (transformer), a requirement for hardware computing power increases exponentially. An existing neural network processing unit (neural processing unit, NPU) architecture adopts centralized computing and centralized storage. As shown in FIG. 1, FIG. 1 shows a computing array and a memory. The computing array stores a computing result in the memory. However, a bandwidth of a physical memory (memory) limits a capability of simultaneously reading and writing high-bandwidth data, that is, a memory wall (memory wall) problem is serious. The memory wall problem limits an upper limit of computing power improvement of an existing neural network processing unit, and consequently it is difficult for an existing neural network processing unit to meet a computing power requirement of a future artificial intelligence technology.

### SUMMARY

Embodiments of this application provide a computing core and a data processing method. An output end of each convolution circuit is coupled to input ends of L multiplexers, to flexibly meet a depth of a convolutional neural network, so that computing resource utilization is improved and hardware costs are reduced.

To achieve the foregoing objective, the following technical solutions are used in embodiments of this application.

According to a first aspect, an embodiment of this application provides a computing core. The computing core includes a plurality of convolution circuits and a plurality of multiplexers. The multiplexer includes an output end and at least two input ends. The output end of the multiplexer is in a one-to-one correspondence with an input end of the convolution circuit. An output end of each of the plurality of convolution circuits is coupled to input ends of L multiplexers, where L is an integer greater than or equal to 2. At least one of the L multiplexers further includes an external data output end. At least one of L convolution circuits corresponding to the L multiplexers further includes an external data input end. The multiplexer is configured to connect an output end of at least one convolution circuit coupled to the multiplexer to the output end of the multiplexer. The external data output end of the multiplexer is configured to output convolution results of the convolution circuits respectively corresponding to the L multiplexers. The external data input end of the convolution circuit is configured to input a to-be-processed feature map.

Therefore, in the computing core provided in this embodiment of this application, the output end of each convolution circuit is coupled to input ends of at least two multiplexers. Compared with a matrix-type in-memory computing network structure, the computing core can flexibly meet a requirement of the computing core for computing resources in different dimensions such as a network depth, a quantity of input and output channels, and a feature map size by using a selection function of the multiplexer. This improves computing resource utilization of the computing core and reduces a circuit area and costs of a chip.

In a possible design, the computing core further includes a plurality of adders. The plurality of convolution circuits include a first convolution circuit and a second convolution circuit. A first input end of a first adder in the plurality of adders is coupled to an output end of the first convolution circuit. A second input end of the first adder is coupled to an output end of the second convolution circuit. An output end of the first adder is coupled to the input ends of the L multiplexers.

In this design, the computing core can implement twofold input channel extension, so that a requirement of the computing core for the input channel can be flexibly met, and applicability of the computing core to different network algorithms is improved.

In a possible design, the plurality of convolution circuits further include a third convolution circuit and a fourth convolution circuit. The plurality of adders further include a second adder and a third adder. A first input end of the second adder is coupled to an output end of the third convolution circuit. A second input end of the second adder is coupled to an output end of the fourth convolution circuit. An output end of the second adder is coupled to a first input end of the third adder. A second input end of the third adder is coupled to the output end of the first adder. An output end of the third adder is coupled to the input ends of the L multiplexers.

In this design, the computing core can implement fourfold input channel extension, so that a requirement of the computing core for the input channel can be flexibly met, and applicability of the computing core to different network algorithms is improved. In addition, the computing core may further implement input channel extension at another multiple.

In a possible design, the plurality of convolution circuits include a fifth convolution circuit. The plurality of multiplexers include a first multiplexer and a second multiplexer. The first multiplexer is configured to connect an output end of the fifth convolution circuit to an output end of the first multiplexer. The second multiplexer is configured to connect the output end of the fifth convolution circuit to an output end of the second multiplexer.

In this design, the computing core can implement output channel extension, so that a requirement of the computing core for the output channel can be flexibly met, and applicability of the computing core to different network algorithms is improved.

In a possible design, the convolution circuit includes a first buffer module and a convolution computing module. The first buffer module is configured to buffer input data and a weight parameter of another convolution circuit. The convolution computing module is configured to perform a convolution operation based on the input data and the weight parameter.

In this design, the convolution circuit is also of an in-memory computing architecture. Input data sequentially passes through different convolution circuits in the computing core, and is output from the computing core only at last. This can reduce power consumption of data access, and reduce a processing delay.

In a possible design, the plurality of convolution circuits further include a sixth convolution circuit and a seventh convolution circuit. Input data of the plurality of convolution circuits includes a first feature map. The first feature map includes a first data block and a second data block. The multiplexer is further configured to: transmit the first data block to the sixth convolution circuit at a first moment, and transmit the second data block to the seventh convolution circuit at a second moment. T the sixth convolution circuit is configured to start performing a convolution operation on the first data block at the first moment. The seventh convolution circuit is configured to start performing a convolution operation on the second data block at the second moment. An interval between the first moment and the second moment may be ignored relative to time for performing a convolution operation on a data block by the convolution circuit. In this way, for a large feature map, the computing core may implement parallel execution of different data blocks of a same feature map. This can improve computing resource utilization of the computing core.

In a possible design, the computing core further includes a hardware multi-thread control circuit. The convolution circuit is configured to execute at least one hardware thread. The at least one hardware thread includes a first hardware thread. The hardware multi-thread control circuit is configured to: after the convolution circuit obtains a third data block, control the convolution circuit to execute the first hardware thread, where the at least one hardware thread is in a one-to-one correspondence with convolution operations in different convolutional layers, and the third data block is a data block of a feature map of a convolutional layer corresponding to the first hardware thread.

In a possible design, the hardware multi-thread control circuit is further configured to: after the convolution circuit obtains a fourth data block, control the convolution circuit to repeatedly execute the first hardware thread, where the fourth data block is also a data block of the feature map of the convolutional layer corresponding to the first hardware thread.

In a possible design, the at least one hardware thread further includes a second hardware thread. The convolution circuit includes an eighth convolution circuit. The hardware multi-thread control circuit is further configured to: control the eighth convolution circuit to execute the first hardware thread; and control, when the first hardware thread is completed, the eighth convolution circuit to continue performing computation of the second hardware thread.

In this design, the computing core may multiplex a plurality of hardware threads in a time-division manner. The plurality of hardware threads may correspond to a same convolutional layer, or the plurality of hardware threads may correspond to different convolutional layers. In other words, the computing core may perform an operation in a same convolutional layer in a time-division manner, or the computing core may perform operations in different convolutional layers in a time-division manner, so that computing resource utilization is improved.

In a possible design, the hardware multi-thread control circuit is specifically configured to: when the first hardware thread is completed, determine whether the second hardware thread meets a switching condition, where the switching condition includes that the eighth convolution circuit has obtained a data block of a feature map of a convolutional layer corresponding to the second hardware thread, and a first buffer module that corresponds to a data block for storing an output of the second hardware thread and that is in the eighth convolution circuit is empty, and the eighth convolution circuit is in an idle state; and if the second hardware thread meets the switching condition, control the convolution circuit to continue performing the computation of the second hardware thread.

In this design, after the convolution circuit completes the computation of the first hardware thread, the hardware multi-thread control circuit determines whether the second hardware thread meets the switching condition, to determine whether the convolution circuit continues to execute the second hardware thread. The second hardware thread that meets the switching condition can ensure that the second hardware thread can be immediately executed for computation. This can improve computing resource utilization of the computing core.

In a possible design, the hardware multi-thread control circuit is further configured to: after the second hardware thread meets the switching condition, control, based on a weight parameter and a priority of the second hardware thread, the convolution circuit to continue performing the computation of the second hardware thread.

In this design, if there are a plurality of second hardware threads that meet the switching condition, a second hardware thread that has obtained a corresponding weight parameter and that has a highest priority in the plurality of second hardware threads need to be processed first, so that efficiency of the computing core can be improved.

In a possible design, the output end of each of the plurality of convolution circuits is coupled to input ends of the plurality of multiplexers.

In this design, when a quantity of convolution circuits is small, the output end of each of the plurality of convolution circuits may be coupled to the input end of the multiplexer, to form a full-selection architecture, so that flexibility of the computing core can be improved.

In a possible design, the computing core includes n convolution circuits, where n is an integer greater than 1. The computing core further includes a switch and n second buffer modules. The switch includes n input ends and n output ends. Output ends of the n second buffer modules are in a one-to-one correspondence with the n input ends of the switch. The n output ends of the switch are in a one-to-one correspondence with the n convolution circuits.

In this design, the second buffer module may be added before the convolution circuit, to facilitate centralized management. In addition, the switch is added to the computing core, to improve flexibility of data transmission of the computing core.

According to a second aspect, an embodiment of this application further provides a data processing method. The data processing method is applied to a computing core. The computing core includes a plurality of convolution circuits and a plurality of multiplexers. The multiplexer includes an output end and at least two input ends. The output end of the multiplexer is in a one-to-one correspondence with an input end of the convolution circuit. An output end of each of the plurality of convolution circuits is coupled to input ends of L multiplexers, where L is an integer greater than or equal to 2. At least one of the L multiplexers further includes an external data output end. At least one of L convolution circuits corresponding to the L multiplexers further includes an external data input end. The method includes: controlling the multiplexer to connect an output end of at least one convolution circuit coupled to the multiplexer to the output end of the multiplexer; controlling the external data output end of the multiplexer to output convolution results of the convolution circuits respectively corresponding to the L multiplexers; and controlling the external data input end of the convolution circuit to input a to-be-processed feature map.

For beneficial effect of the second aspect, refer to the descriptions of the first aspect.

In a possible design, the computing core further includes a plurality of adders. The plurality of convolution circuits include a first convolution circuit and a second convolution circuit. A first input end of a first adder in the plurality of adders is coupled to an output end of the first convolution circuit. A second input end of the first adder is coupled to an output end of the second convolution circuit. An output end of the first adder is coupled to the input ends of the L multiplexers.

In a possible design, the plurality of convolution circuits further include a third convolution circuit and a fourth convolution circuit. The plurality of adders further include a second adder and a third adder. A first input end of the second adder is coupled to an output end of the third convolution circuit. A second input end of the second adder is coupled to an output end of the fourth convolution circuit. An output end of the second adder is coupled to a first input end of the third adder. A second input end of the third adder is coupled to the output end of the first adder. An output end of the third adder is coupled to the input ends of the L multiplexers.

In a possible design, the plurality of convolution circuits include a fifth convolution circuit. The plurality of multiplexers include a first multiplexer and a second multiplexer. The method includes: controlling the first multiplexer to connect an output end of the fifth convolution circuit to an output end of the first multiplexer; and controlling the second multiplexer to connect the output end of the fifth convolution circuit to an output end of the second multiplexer.

In a possible design, the convolution circuit includes a first buffer module and a convolution computing module. The method further includes: controlling the first buffer module to buffer input data and a weight parameter of another convolution circuit; and controlling the convolution computing module to perform a convolution operation based on the input data and the weight parameter.

In a possible design, the plurality of convolution circuits further include a sixth convolution circuit and a seventh convolution circuit. Input data of the external data input end of the plurality of convolution circuits includes a first feature map, and the first feature map includes a first data block and a second data block. The method further includes: controlling the multiplexer to transmit the first data block to the sixth convolution circuit at a first moment and transmit the second data block to the seventh convolution circuit at a second moment; and controlling the sixth convolution circuit to start performing a convolution operation on the first data block at the first moment, and controlling the seventh convolution circuit to start performing a convolution operation on the second data block at the second moment.

In a possible design, the computing core further includes a hardware multi-thread control circuit. The convolution circuit is configured to execute at least one hardware thread. The at least one hardware thread includes a first hardware thread. The method further includes: after the convolution circuit obtains a third data block, controlling the hardware multi-thread control circuit to control the convolution circuit to execute the first hardware thread, where the at least one hardware thread is in a one-to-one correspondence with convolution operations in different convolutional layers, and the third data block is a data block of a feature map of a convolutional layer corresponding to the first hardware thread.

In a possible design, the method further includes: after the convolution circuit obtains a fourth data block, controlling the hardware multi-thread control circuit to control the convolution circuit to repeatedly execute the first hardware thread, where the fourth data block is also a data block of the feature map of the convolutional layer corresponding to the first hardware thread.

In a possible design, the at least one hardware thread further includes a second hardware thread. The convolution circuit includes an eighth convolution circuit. The method further includes: controlling the hardware multi-thread control circuit to control the eighth convolution circuit to execute the first hardware thread; and controlling, when the first hardware thread is completed, the hardware multi-thread control circuit to control the eighth convolution circuit to continue performing computation of the second hardware thread.

In a possible design, controlling, when the first hardware thread is completed, the hardware multi-thread control circuit to control the eighth convolution circuit to continue performing the computation of the second hardware thread includes: when the first hardware thread is completed, determining whether the second hardware thread meets a switching condition, where the switching condition includes that the eighth convolution circuit has obtained a data block of a feature map of a convolutional layer corresponding to the second hardware thread, and a first buffer module that corresponds to a data block for storing an output of the second hardware thread and that is in the eighth convolution circuit is empty, and the eighth convolution circuit is in an idle state; and controlling the hardware multi-thread control circuit to control the convolution circuit to continue performing the computation of the second hardware thread.

In a possible design, the method further includes: after the second hardware thread meets the switching condition, controlling, based on a weight parameter and a priority of the second hardware thread, the hardware multi-thread control circuit to control the convolution circuit to continue performing the computation of the second hardware thread.

In a possible design, the output end of each of the plurality of convolution circuits is coupled to input ends of the plurality of multiplexers.

In a possible design, the computing core includes n convolution circuits, where n is an integer greater than 1. The computing core further includes a switch and n second buffer modules. The switch includes n input ends and n output ends. Output ends of the n second buffer modules are in a one-to-one correspondence with the n input ends of the switch. The n output ends of the switch are in a one-to-one correspondence with the n convolution circuits.

According to a third aspect, an embodiment of this application provides a chip. The chip includes a processor and the computing core according to the first aspect. The computing core is electrically connected to the processor.

According to a fourth aspect, an embodiment of this application provides an electronic device. The electronic device includes a printed circuit board and the computing core according to the first aspect. The computing core is electrically connected to the printed circuit board.

According to a fifth aspect, an embodiment of this application provides a computer-readable storage medium, including computer instructions. When the computer instructions are run on an electronic device, the electronic device is caused to perform the data processing method according to any one of the foregoing aspects and the possible implementations.

According to a sixth aspect, an embodiment of this application provides a computer program product. When the computer program product runs on a computer or a processor, the computer or the processor is caused to perform the data processing method according to any one of the foregoing aspects and the possible implementations.

According to a seventh aspect, an embodiment of this application provides a system. The system may include a wireless access device and at least one electronic device according to any possible implementation of any one of the foregoing aspects. The electronic device and the wireless access device may perform the data processing method according to any one of the foregoing aspects and the possible implementations.

It may be understood that any computing core, chip, electronic device, computer-readable storage medium, computer program product, or the like provided above may be used in the corresponding method provided above. Therefore, for beneficial effects that can be achieved by the computing core, the chip, the electronic device, the computer-readable storage medium, the computer program product, or the like, refer to the beneficial effects in the corresponding method. Details are not described herein again.

These aspects or other aspects in this application are more concise and comprehensible in the following descriptions.

### BRIEF DESCRIPTION OF DRAWINGS

FIG. 1 is a diagram of an architecture of a neural network processing unit according to an embodiment of this application;
FIG. 2A and FIG. 2B are a diagram of a mesh architecture based on in-memory computing according to an embodiment of this application;
FIG. 3 is a line chart of quantities of weights and quantities of pixels of feature maps that are of different convolutional layers of a network algorithm according to an embodiment of this application;
FIG. 4A and FIG. 4B are a diagram of multiplier resource allocation when a mesh architecture based on in-memory computing executes a network algorithm according to an embodiment of this application;
FIG. 5 is a diagram of execution efficiency of a multiplier when a mesh architecture based on in-memory computing executes a network algorithm according to an embodiment of this application;
FIG. 6 is a diagram of an execution device according to an embodiment of this application;
FIG. 7 is a diagram of a chip according to an embodiment of this application;
FIG. 8 is a diagram of a structure of a computing core according to an embodiment of this application;
FIG. 9 is a diagram of performing continuous convolution by a computing core according to an embodiment of this application;
FIG. 10 is a diagram of input channel extension of a computing core according to an embodiment of this application;
FIG. 11 is a diagram of output channel extension of a computing core according to an embodiment of this application;
FIG. 12 is a diagram of parallel execution of a plurality of data blocks by a computing core according to an embodiment of this application;
FIG. 13 is a mapping diagram of a computing core and an AI algorithm network according to an embodiment of this application;
FIG. 14 is a diagram of data block division of a feature map according to an embodiment of this application;
FIG. 15 is a time sequence diagram in which a hardware thread performs computation in different convolutional layers in a time-division manner according to an embodiment of this application;
FIG. 16 is a diagram of a full-selection architecture according to an embodiment of this application;
FIG. 17 is a diagram of a structure of another computing core according to an embodiment of this application;
FIG. 18 is a flowchart of a data processing method according to an embodiment of this application;
FIG. 19 is a diagram of computing resource utilization of a network algorithm based on an in-memory computing architecture according to an embodiment of this application; and
FIG. 20 is a diagram of computing resource utilization based on a computing core according to an embodiment of this application.

### DESCRIPTION OF EMBODIMENTS

For ease of understanding, some concepts related to embodiments of this application are described for reference by using examples. Details are as follows:

A convolutional neural network (convolutional neural network, CNN) is a type of a feedforward neural network (feedforward neural network, FNN) that includes convolution computing and that has a deep structure, and is one of representative algorithms of deep learning (deep learning).

The convolutional neural network includes a feature extractor including a convolutional layer and a sampling sub-layer. The feature extractor may be considered as a filter. Convolution computing may be considered as performing convolution on an input image or a convolution feature map (feature map) via a trainable filter. The convolution feature map may also be referred to as a feature map. The convolutional layer is a neuron layer that is in the convolutional neural network and in which convolution processing is performed on an input signal. In the convolutional layer of the convolutional neural network, one neuron may be connected only to some adjacent-layer neurons. One convolutional layer usually includes several feature maps, and each feature map may include some neurons arranged in a rectangle. Neurons in a same feature map share a weight, and a weight matrix corresponding to the weight shared herein is a convolution kernel. Weight sharing may be understood as that an image information extraction manner is unrelated to a location. An image is used an example. A principle implied herein is that statistical information of a part of the image is the same as that of other parts. This means that image information learned in a part can also be used in another part. Therefore, the same image information obtained through learning can be used for all locations on the image. In a same convolutional layer, a plurality of convolution kernels may be used to extract different image information. Generally, a larger quantity of convolution kernels indicates richer image information reflected in a convolution operation.

In-memory computing: Algorithm embedding is performed in a memory, and an operation in a computer is transferred from a central processing unit (central processing unit, CPU) to the memory for performing, so that computation is performed in a storage and computing cell (cell). This can greatly reduce data exchange time and data access energy consumption in a computation process.

An in-memory computing apparatus has two implementations: constructing a computing array via an analog device (for example, a resistive random-access memory (resistive random-access memory, ReRAM)), and constructing a computing array via a digital device (for example, a static random-access memory (static random-access memory, SRAM)).

A computing array (crossbar, XB) is constructed via the storage and computing cell. Each computing array includes several rows and several columns.

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

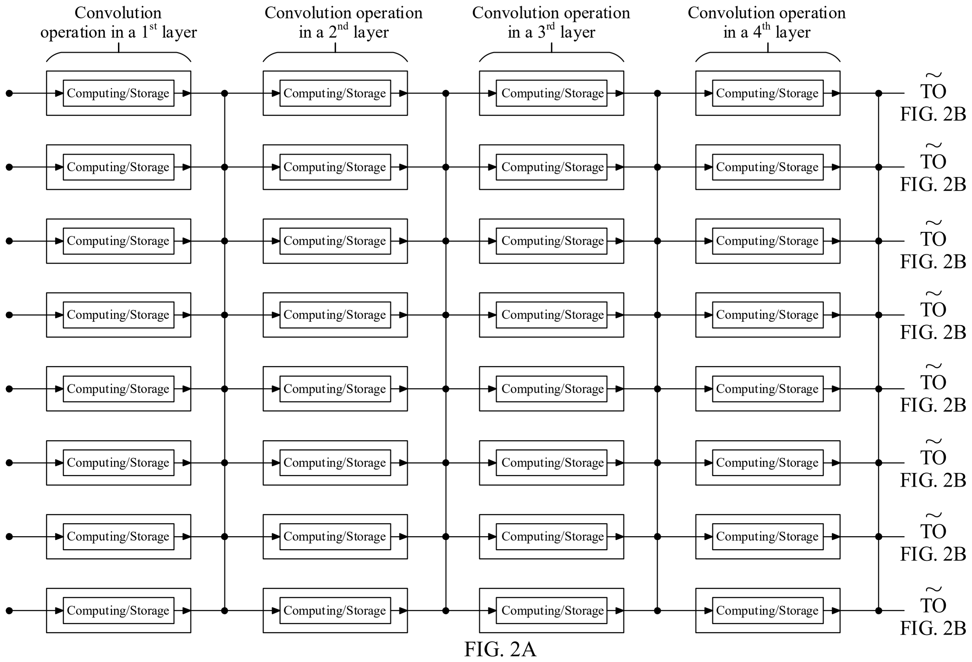

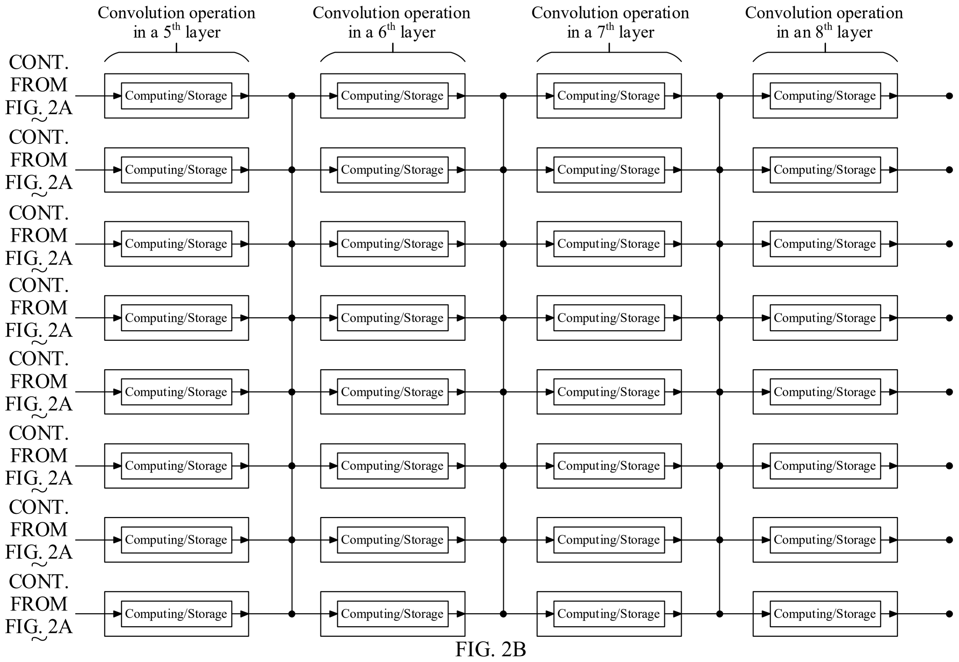

To resolve a memory wall problem, in the conventional technology, an eight-layer convolution operation is shown in a mesh (mesh) architecture based on in-memory computing (in memory computing, IMC) proposed in FIG. 2A and FIG. 2B. In the mesh structure based on in-memory computing, computing/storage (computing/storage) cells are connected end to end, to form a matrix type. During computing resource allocation, each vertical column is allocated to a same layer of a network algorithm, and hardware computing resources are allocated in sequence based on a sequence of convolutional layers, so that the entire network algorithm can be allocated to a mesh array by layer. In a computing execution process, intermediate layer data flows inside without leaving a compute and storage core. This not only resolves the memory wall problem, but also greatly improves hardware computing power.

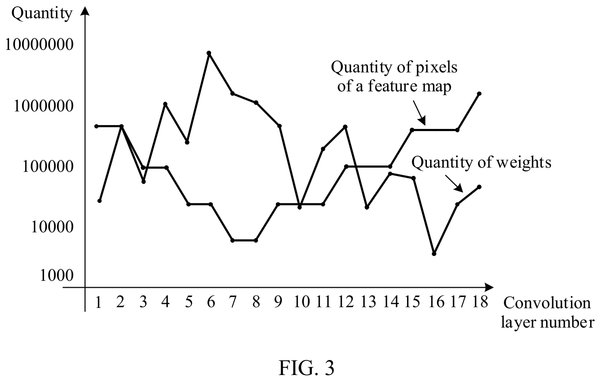

However, the mesh structure based on in-memory computing has a problem of low computing resource utilization in actual application. In an example, Table 1 shows a quantity of weights (weight) and a map size (indicated by a quantity of pixels) of a feature map (feature map) that are of each convolutional layer of a network algorithm. In addition, a line chart corresponding to Table 1 is shown in FIG. 3.

**Table 1**

| Convolutional layer | Quantity of weights | Quantity of pixels of a feature map |
|---|---|---|
| 1 | 1152 | 1534464 |
| 2 | 1152 | 383616 |
| 3 | 9216 | 383616 |
| 4 | 2048 | 95904 |
| 5 | 18432 | 95904 |
| 6 | 6144 | 23976 |
| 7 | 73728 | 23976 |
| 8 | 24576 | 5994 |
| 9 | 18432 | 5994 |
| 10 | 9216 | 23976 |
| 11 | 1024 | 23976 |
| 12 | 5120 | 23976 |
| 13 | 9216 | 95904 |
| 14 | 1024 | 95904 |
| 15 | 2560 | 95904 |
| 16 | 2304 | 383616 |
| 17 | 256 | 383616 |
| 18 | 1024 | 383616 |
| 19 | 1728 | 1534464 |

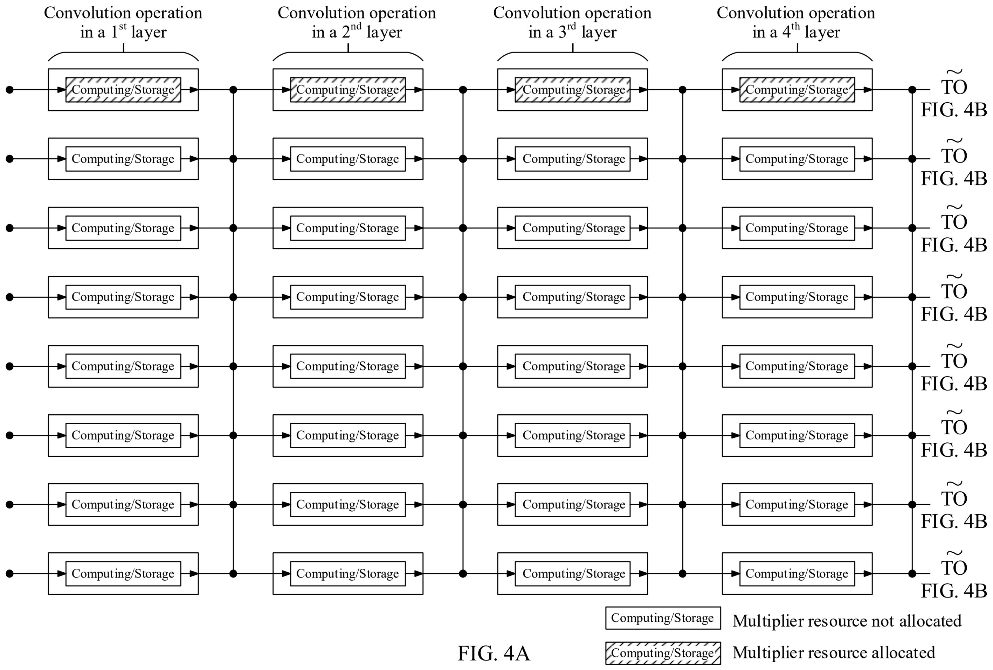

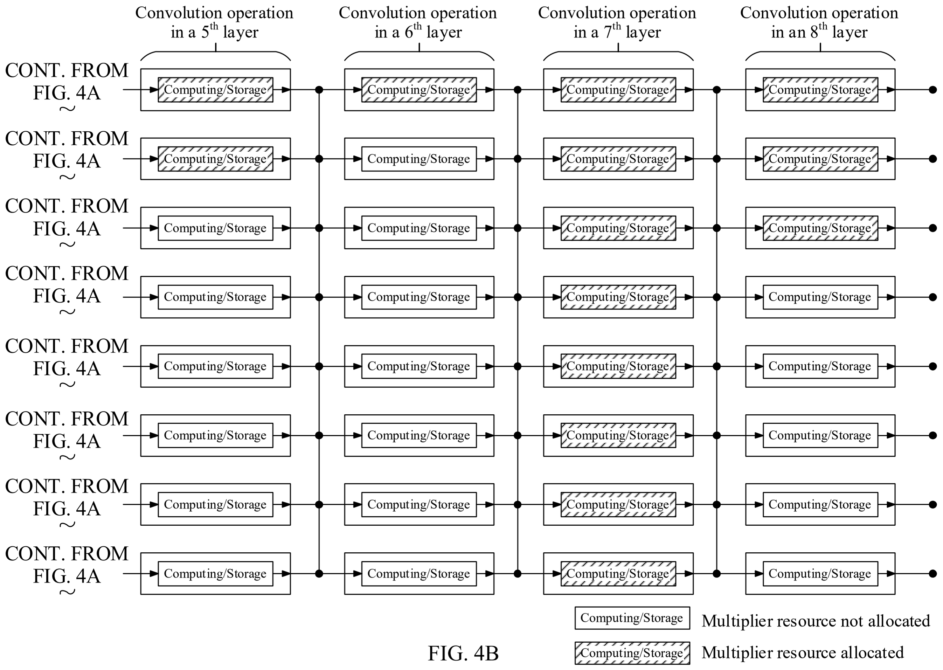

It can be learned from Table 1 and FIG. 3 that a quantity of weights of each convolutional layer varies greatly. For example, a quantity of weights of a 7^{th} convolutional layer is approximately 64 times a quantity of weights of a 1^{st} convolutional layer. The quantity of weights determines a quantity of multipliers required. Therefore, a quantity of multipliers required by the 7^{th} convolutional layer is approximately 64 times a quantity of multipliers required by the 1^{st} convolutional layer. When the mesh structure based on in-memory computing performs computation by using the network algorithm, as shown in FIG. 4A and FIG. 4B, there is a problem that multiplier resources of the 7^{th} convolutional layer are insufficient while a large quantity of multiplier resources of the 1^{st} convolutional layer are left. This leads to very low utilization of a hardware algorithm device.

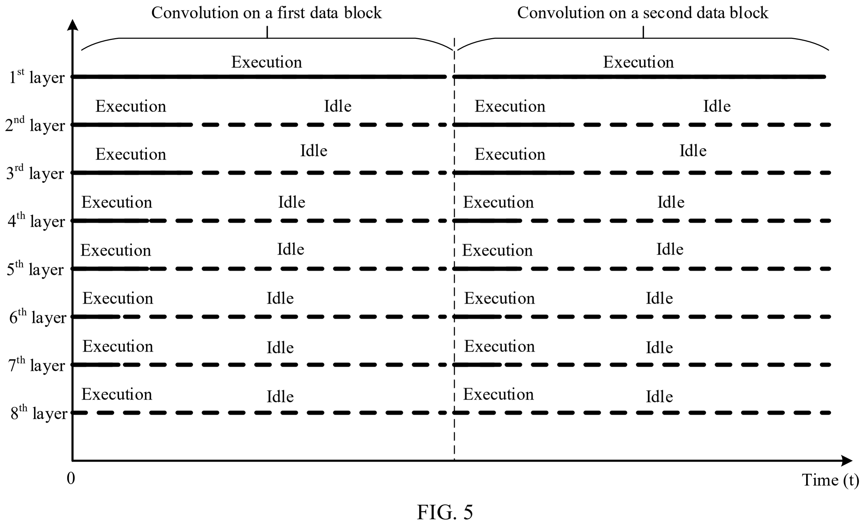

In addition, the mesh structure based on in-memory computing further has a problem of low time efficiency in actual application. It can be learned from Table 1 that a quantity of pixels of a feature map of each convolutional layer also varies greatly. For example, a quantity of pixels of a feature map of a 1^{st} convolutional layer is approximately 256 times a quantity of pixels of a feature map of an 8^{th} convolutional layer. The quantity of pixels of the feature map determines a computation amount of the convolutional layer. Therefore, a computation amount of a single channel of the 1^{st} convolutional layer is approximately 256 times a computation amount of a single channel of the 8^{th} convolutional layer. When the mesh structure based on in-memory computing performs computation by using the network algorithm, as shown in FIG. 5, execution time of the single channel of the 1^{st} convolutional layer is two orders of magnitude longer than that of the 8^{th} convolutional layer. Even if the 1^{st} convolutional layer adopts a parallel execution policy to increase a computing capability, the two orders of magnitude difference cannot be compensated. As a result, multipliers of other convolutional layers are idle for a large amount of time in the entire execution time cycle. In this case, execution efficiency of the multiplier is low.

In addition to the foregoing two problems, the mesh structure based on in-memory computing further has a problem that it is difficult to be compatible with a deep convolutional network algorithm. Different network algorithms have different requirements for a quantity of convolutional layers and different requirements for computing power of each convolutional layer. For example, some network algorithms have a small quantity of network layers but have a high requirement for computing power of each convolutional layer, or some network algorithms have a large quantity of network layers but have a low requirement for computing power of each convolutional layer. It is difficult for the mesh structure based on in-memory computing to be compatible with different network algorithms that have different requirements for a quantity of layers and computing power of each layer. In conclusion, the mesh structure based on in-memory computing has low efficiency, a large waste of hardware resources, and high hardware area costs.

In view of this, an embodiment of this application provides a computing core. The computing core includes a plurality of convolution circuits and a plurality of multiplexers. An output end of each convolution circuit is coupled to input ends of at least two multiplexers. Compared with a matrix-type in-memory computing network structure, the computing core can flexibly meet a requirement for computing resources in different dimensions such as a network depth, a quantity of input and output channels, and a feature map size by using a selection function of the multiplexer. This improves computing resource utilization of the computing core and reduces a circuit area and costs of a chip.

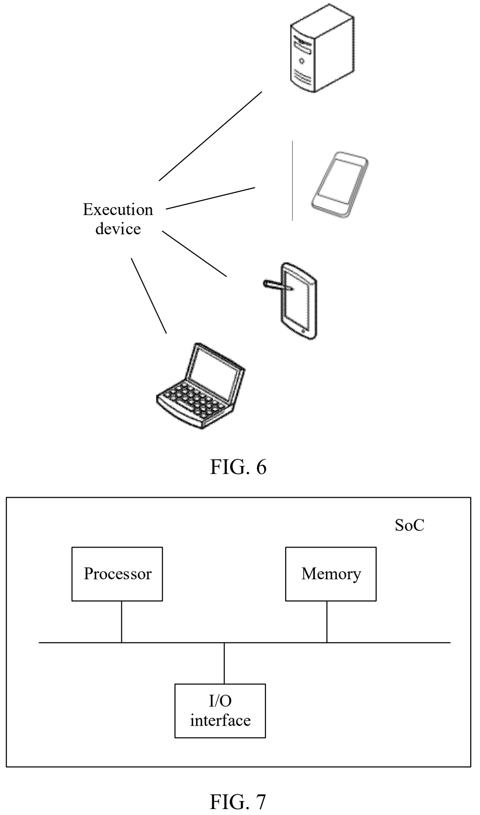

In the foregoing scenario, the computing core and a data processing method in embodiments of this application may be applied to different systems or devices. For example, the computing core and the data processing method may be applied to an execution device shown in FIG. 6. The execution device may be a terminal, for example, a mobile phone terminal, a tablet computer, a notebook computer, an augmented reality (augmented reality, AR) device (not shown in FIG. 6), a virtual reality (virtual reality, VR) device (not shown in FIG. 6), or a vehicle-mounted terminal (not shown in FIG. 6), or may be a server. The execution device is provided with an input/output (input/output, I/O) interface, and is configured to exchange data with an external device. For example, a user may input data to the I/O interface via customer equipment. The input data in this embodiment of this application may include an input image, and may be an image captured by the execution device via a data collection device, an image in a database of the execution device, or an image from the customer equipment.

In some embodiments, the computing core in this embodiment of this application may be understood as a chip. For example, the chip is a system-on-a-chip (system-on-a-chip, SoC). As shown in FIG. 7, the SoC includes a processor, a memory, an I/O interface, and the like. The processor may be a single-core processor or a multi-core processor. After loading data and an application in the memory, the processor may process the data, for example, perform convolution processing in this application. For example, convolution computing is performed on an input image, to obtain a convolution computing result of the input image.

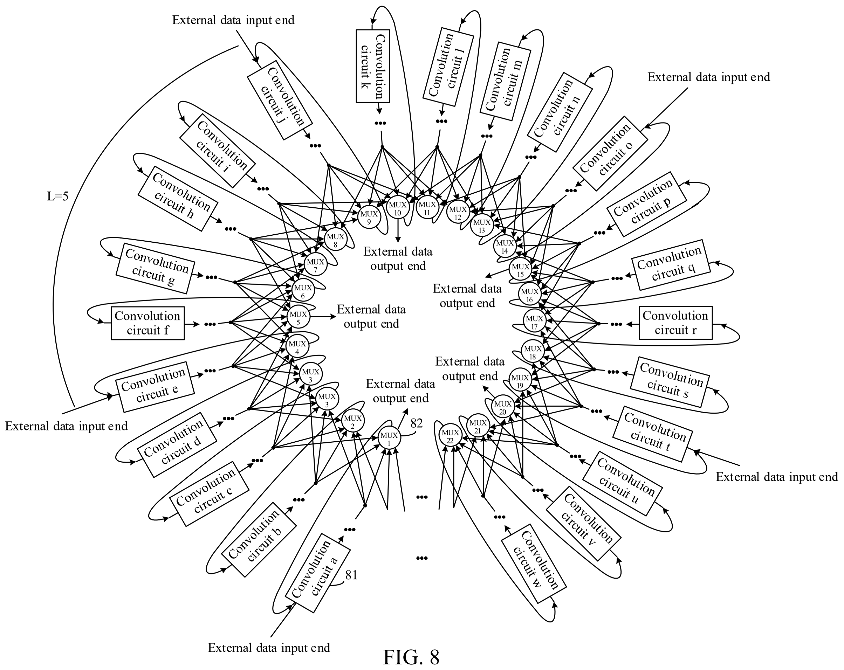

An embodiment of this application provides a computing core 80. FIG. 8 is a diagram of a structure of a computing core according to an embodiment of this application. The computing core 80 includes a plurality of convolution circuits 81 and a plurality of multiplexers (multiplexer, MUX) 82. The multiplexer 82 includes an output end and at least two input ends. The output end of the multiplexer 82 is in a one-to-one correspondence with an input end of the convolution circuit 81. An output end of each of the plurality of convolution circuits 81 is coupled to input ends of L multiplexers 82, where L is an integer greater than or equal to 2. At least one of the L multiplexers 82 further includes an external data output end. At least one of L convolution circuits 81 corresponding to the L multiplexers 82 further includes an external data input end.

The multiplexer 82 is configured to connect an output end of at least one convolution circuit 81 coupled to the multiplexer 82 to the output end of the multiplexer 82. The external data output end of the multiplexer 82 is configured to output convolution results of the convolution circuits 81 respectively corresponding to the L multiplexers 82. The external data input end of the convolution circuit 81 is configured to input a to-be-processed feature map.

As shown in FIG. 8, the multiplexer 82 includes one output end and five input ends. The output end of each convolution circuit 81 is coupled to input ends of five multiplexers 82. In other words, L=5.

The convolution circuit 81 may also be referred to as a convolution unit (convolution unit, CU). The convolution circuit 81 may include a plurality of input channels, a plurality of multipliers, and an adder. The plurality of input channels are parallel input channels. Input data of each input channel includes a feature map and a weight. The plurality of multipliers are configured to correspondingly multiply the feature map and the weight that are in the input data of each input channel, and the adder is configured to add output results of the plurality of multipliers, to obtain a convolution result.

The multiplexer 82 may also be referred to as a data selector, a selector, or the like. The multiplexer 82 may include a plurality of input ends and one output end, and is configured to select one signal from a plurality of input signals as an output signal. In this embodiment of this application, an input end of each multiplexer 82 is coupled to output ends of the L convolution circuits 81. The multiplexer 82 may select one output signal from output signals of the L convolution circuits 81 as an output signal.

For ease of understanding, the convolution circuits 81 in FIG. 8 are numbered in a manner of a convolution circuit a, a convolution circuit b, ..., and a convolution circuit w, and the multiplexers 82 in FIG. 8 are numbered in a manner of a MUX 1, a MUX 2, ..., and a MUX 22. Numbering is performed in the same manner in subsequent accompanying drawings. The convolution circuit 81 and the multiplexer 82 in FIG. 8 form a helical shape. A circuit structure in FIG. 8 is merely a diagram. An output end of the convolution circuit a may be coupled to an input end of the MUX 22. Therefore, the computing core 80 is in a shape of a helical ring. In addition, the output end of the convolution circuit a may alternatively not be coupled to the input end of the MUX 22.

The convolution circuit 81 may further include external data input ends. It can be learned from FIG. 8 that the convolution circuit a, the convolution circuit e, the convolution circuit j, the convolution circuit o, and the convolution circuit t each may include an external data input end. The convolution circuit 81 including the external data input ends may be used as a first convolutional layer of a network algorithm. In addition, the multiplexer 82 may further include external data output ends. It can be learned from FIG. 8 that the MUX 1, the MUX 6, the MUX 11, the MUX 16, and the MUX 21 each may include an external data output end. Therefore, convolution results of the convolution circuit a, the convolution circuit b, and the convolution circuit c may be output through the external data output end of the MUX 1. Convolution results of the convolution circuit d, the convolution circuit e, the convolution circuit f, the convolution circuit g, and the convolution circuit h may be output through the external data output end of the MUX 6. By analogy, the convolution circuit a to the convolution circuit w each have a corresponding external data output end of the multiplexer 82 for result output. In other words, when the current convolution circuit 81 performs the last layer of convolution operation of the network algorithm, the current convolution circuit 81 has a corresponding external data output end of the multiplexer 82 to output a convolution result.

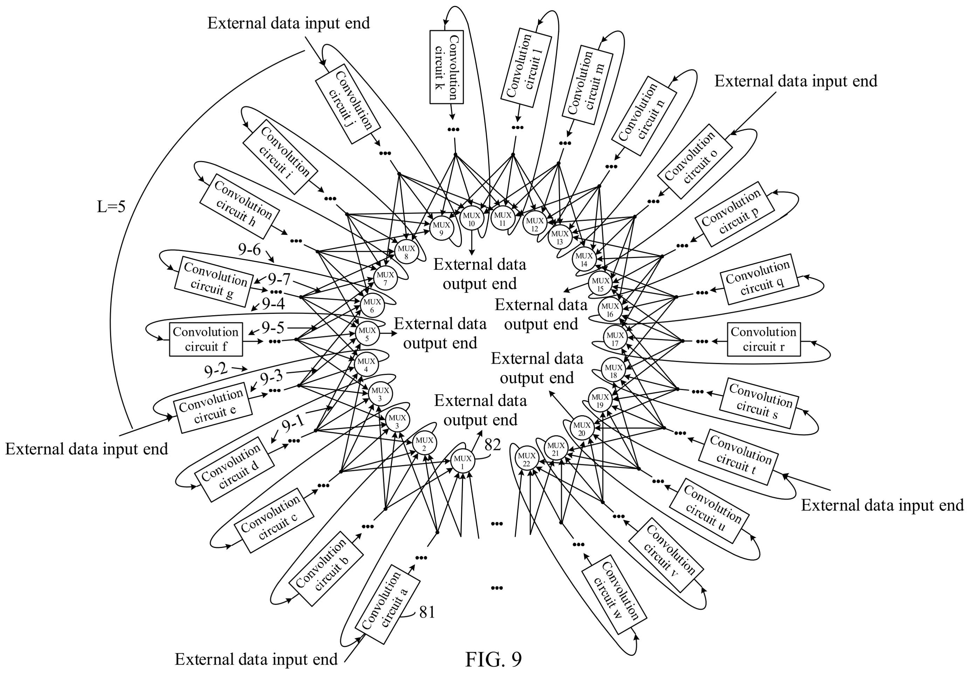

FIG. 9 is a diagram of performing continuous convolution by the computing core according to an embodiment of this application. The plurality of convolution circuits 81 may execute different convolutional layers in parallel. In an example, it is assumed that the convolution circuit e is configured to perform a convolution operation in the first convolutional layer, the convolution circuit f is configured to perform a convolution operation in a second convolutional layer, and the convolution circuit g is configured to perform a convolution operation in a third convolutional layer. The MUX 4 corresponding to the convolution circuit e receives a first convolution result of another convolution circuit 81 (for example, a path 9-1 in FIG. 9), and the MUX 4 transmits the first convolution result to the convolution circuit e (for example, a path 9-2 in FIG. 9). The convolution circuit e performs a convolution operation in the first convolutional layer to obtain a second convolution result. The convolution circuit e transmits the second convolution result to the MUX 5 (for example, a path 9-3 in FIG. 9), and the MUX 5 transmits the second convolution result to the convolution circuit f (for example, a path 9-4 in FIG. 9). The convolution circuit f performs a convolution operation in the second convolutional layer to obtain a third convolution result. The convolution circuit f transmits the third convolution result to the MUX 6 (for example, a path 9-5 in FIG. 9), and the MUX 6 transmits the third convolution result to the convolution circuit g (for example, a path 9-6 in FIG. 9). The convolution circuit g performs a convolution operation in the third convolutional layer to obtain a fourth convolution result, and transmits the fourth convolution result to a next convolution circuit 81 (for example, a path 9-7 in FIG. 9).

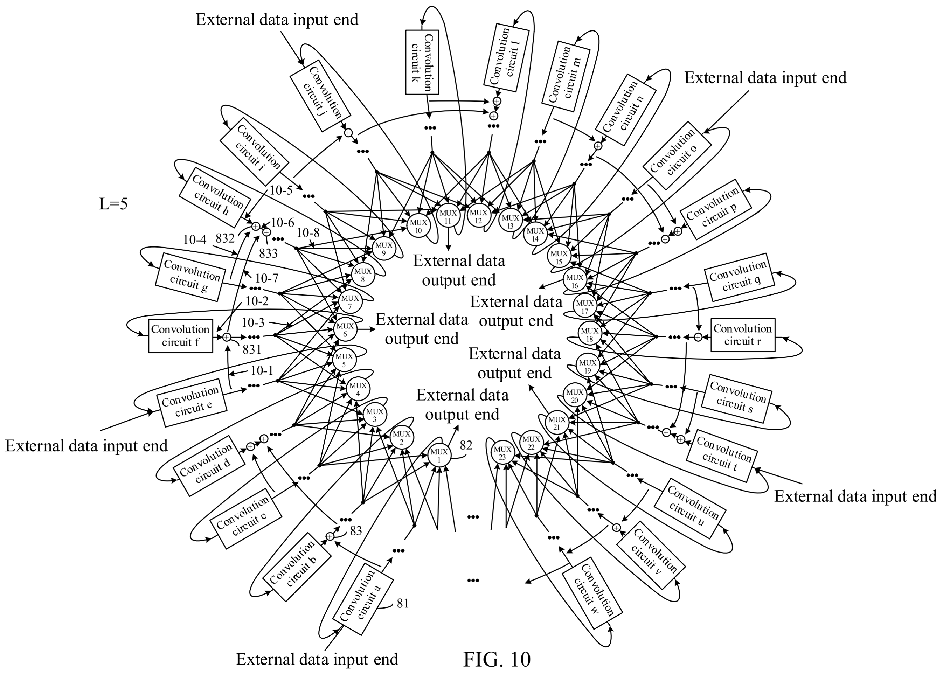

The computing core 80 may implement input channel extension. FIG. 10 is a diagram of input channel extension of the computing core according to an embodiment of this application. The computing core 80 may further include a plurality of adders 83, and the plurality of convolution circuits 81 include a first convolution circuit and a second convolution circuit. A first input end of a first adder 831 in the plurality of adders 83 is coupled to an output end of the first convolution circuit, a second input end of the first adder 831 is coupled to an output end of the second convolution circuit, and an output end of the first adder 831 is coupled to the input ends of L multiplexers 82.

In an example, it is assumed that each convolution circuit 81 includes N input channels, and N is an integer greater than or equal to 1. It is assumed that the convolution circuit e is the first convolution circuit, and the convolution circuit f is the second convolution circuit. The convolution circuit e performs a convolution operation on input feature maps of the N input channels to obtain a fifth convolution result. The convolution circuit e transmits the fifth convolution result to the first input end of the first adder (for example, a path 10-1 in FIG. 10). In addition, the convolution circuit f also performs a convolution operation on input feature maps of N input channels to obtain a sixth convolution result. The convolution circuit f transmits the sixth convolution result to the second input end of the first adder 831 (for example, a path 10-2 in FIG. 10). The first adder 831 adds the fifth convolution result and the sixth convolution result to obtain a seventh convolution result. The seventh convolution result is equivalent to a feature map obtained after a convolution operation is performed on input feature maps of 2N input channels. The first adder 831 transmits the seventh convolution result to a next multiplexer 82 (for example, a path 10-3 in FIG. 10) for a subsequent convolution operation.

In addition, the plurality of convolution circuits 81 may further include a third convolution circuit and a fourth convolution circuit, and the plurality of adders 83 may further include a second adder 832 and a third adder 833. A first input end of the second adder 832 is coupled to an output end of the third convolution circuit 813, a second input end of the second adder 832 is coupled to an output end of the fourth convolution circuit 814, an output end of the second adder 832 is coupled to a first input end of the third adder 833, a second input end of the third adder 833 is coupled to the output end of the first adder 831, and an output end of the third adder 833 is coupled to the input ends of the L multiplexers 82.

Still refer to FIG. 10. It is assumed that the convolution circuit g is the third convolution circuit, and the convolution circuit h is the fourth convolution circuit. In an example, the convolution circuit g performs a convolution operation on input feature maps of N input channels to obtain an eighth convolution result. The convolution circuit g transmits the eighth convolution result to the first input end of the second adder 832 (for example, a path 10-4 in FIG. 10). In addition, the convolution circuit h also performs a convolution operation on input feature maps of N input channels to obtain a ninth convolution result. The convolution circuit h transmits the ninth convolution result to the second input end of the second adder 832 (for example, a path 10-5 in FIG. 10). The second adder 832 adds the eighth convolution result and the ninth convolution result to obtain a tenth convolution result. The tenth convolution result is equivalent to a feature map obtained after a convolution operation is performed on input feature maps of 2N input channels. The second adder 832 transmits the tenth convolution result to the first input end of the third adder 833 (for example, a path 10-6 in FIG. 10). The first adder 831 transmits the seventh convolution result to the second input end of the third adder 833 (for example, a path 10-7 in FIG. 10). The third adder 833 adds the seventh convolution result and the tenth convolution result to obtain an eleventh convolution result. The eleventh convolution result is equivalent to a feature map obtained after a convolution operation is performed on input feature maps of 4N input channels. The third adder 833 transmits the eleventh convolution result to a next multiplexer 82 (for example, a path 10-8 in FIG. 10) for a subsequent convolution operation.

Similarly, the computing core 80 may further implement extension of 8N input channels or extension of even more input channels.

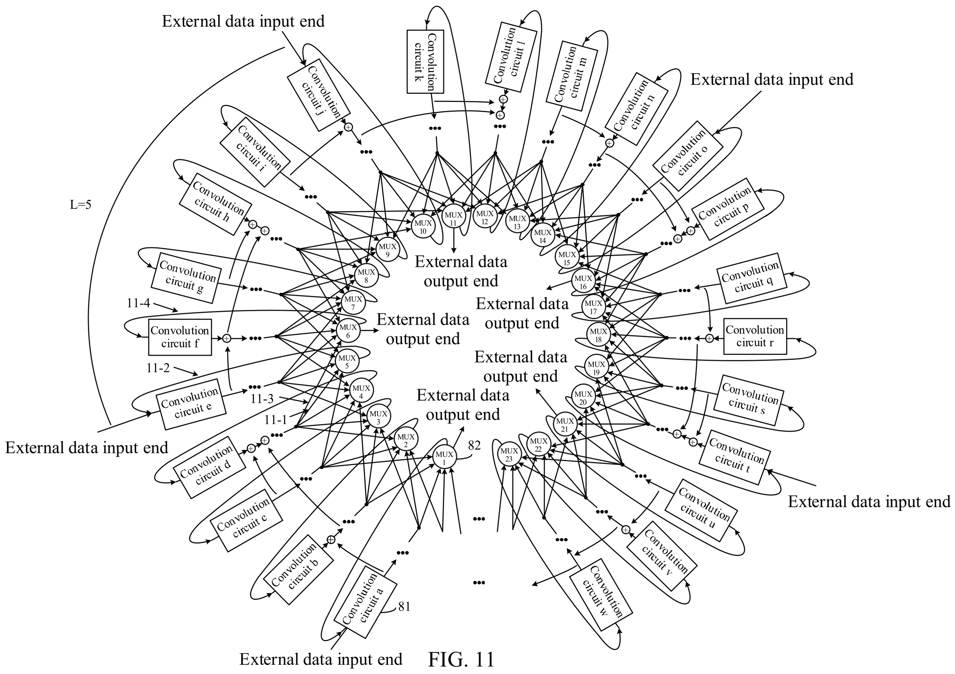

The computing core 80 may further implement output channel extension. FIG. 11 is a diagram of output channel extension of the computing core according to an embodiment of this application. The plurality of convolution circuits 81 may further include a fifth convolution circuit, and the plurality of multiplexers 82 may include a first multiplexer and a second multiplexer. The first multiplexer is configured to connect an output end of the fifth convolution circuit to an output end of the first multiplexer. The second multiplexer is configured to connect the output end of the fifth convolution circuit to an output end of the second multiplexer.

In an example, it is assumed that the convolution circuit d is the fifth convolution circuit, the MUX 5 is the first multiplexer, and the MUX 6 is the second multiplexer. The fifth convolution circuit may be connected to an output end of the MUX 5, and the fifth convolution circuit may also be connected to an output end of the MUX 6. It is assumed that a quantity of output channels of each convolution circuit 81 is also N. The convolution circuit d transmits convolution results of the N output channels to the MUX 5 (for example, a path 11-1 in FIG. 11). The MUX 5 connects an output end of the convolution circuit d to an output end of the MUX 5, and transmits the convolution results of the N output channels to the convolution circuit e (for example, a path 11-2 in FIG. 11). In addition, the convolution circuit d transmits convolution results of another N output channels to the MUX 6 (for example, a path 11-3 in FIG. 11). The MUX 6 connects the output end of the convolution circuit d to an output end of the MUX 6, and transmits the convolution results of the N output channels to the convolution circuit f (for example, a path 11-4 in FIG. 11). Therefore, the convolution circuit d can transmit convolution results of 2N output channels.

Similarly, the computing core 80 may further implement extension of 4N output channels or extension of even more output channels.

In this way, the computing core provided in this embodiment of this application can implement extension of different quantities of input channels and extension of different quantities of output channels, to meet requirements of more network algorithms, and improve flexibility and applicability of the computing core.

Optionally, the convolution circuit 81 may include a first buffer module 811 and a convolution computing module 812. The first buffer module 811 may be a buffer register (buffer). The first buffer module 811 is configured to buffer input data and a weight parameter of another convolution circuit. The convolution computing module 812 is configured to perform a convolution operation based on the input data and the weight parameter.

In this way, the convolution circuit is also of an in-memory computing architecture. Input data sequentially passes through different convolution circuits in the computing core, and is output from the computing core only at last. This can reduce power consumption of data access, and reduce a processing delay.

Optionally, the plurality of convolution circuits 81 may further include a sixth convolution circuit and a seventh convolution circuit. Input data of the plurality of convolution circuits 81 includes a first feature map, and the first feature map includes a first data block and a second data block. The multiplexer 82 is further configured to: transmit the first data block to the sixth convolution circuit at a first moment, and transmit the second data block to the seventh convolution circuit at a second moment. The sixth convolution circuit is configured to start performing a convolution operation on the first data block at the first moment. The seventh convolution circuit is configured to start performing a convolution operation on the second data block at the second moment.

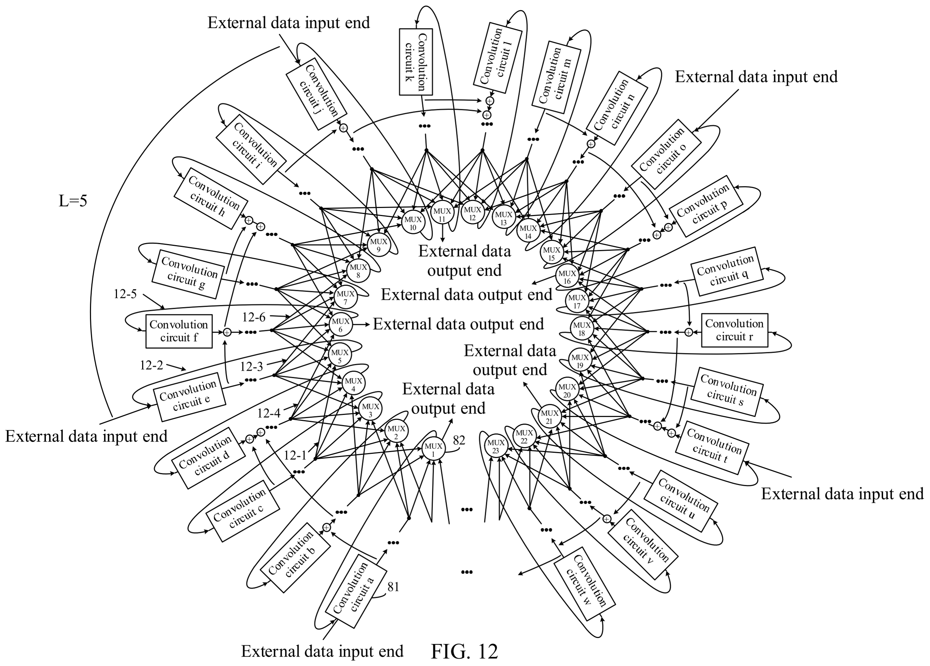

FIG. 12 is a diagram of parallel execution of a plurality of data blocks by the computing core according to an embodiment of this application. It is assumed that the convolution circuit e is the sixth convolution circuit, an input end of the convolution circuit e is coupled to an output end of the MUX 5. It is assumed that the convolution circuit f is the seventh convolution circuit, an input end of the convolution circuit f is coupled to an output end of the MUX 6. It is assumed that the MUX 5 is connected to the convolution circuit c whose convolution result is the first data block (for example, a path 12-1 in FIG. 12), the convolution circuit e corresponding to the MUX 5 performs a convolution operation on the first data block at the first moment (for example, a path 12-2 in FIG. 12), and outputs a convolution result to the MUX 7 (for example, a path 12-3 in FIG. 12). In addition, it is assumed that the MUX 6 is connected to the convolution circuit d whose convolution result is the second data block (for example, a path 12-4 in FIG. 12), the convolution circuit f corresponding to the MUX 6 performs a convolution operation on the second data block at the second moment (for example, a path 12-5 in FIG. 12), and outputs a convolution result to the MUX 8 (for example, a path 12-6 in FIG. 12). An interval between the first moment and the second moment may be ignored relative to time for performing a convolution operation by the convolution circuit. Therefore, it may be understood that convolution operations are performed on the first data block and the second data block in parallel.

In another implementation, the first data block and the second data block may be input to different convolution circuits through different external data input ends, and different convolution circuits perform parallel computing on different data blocks in a same feature map. In an example, the first data block is input to the convolution circuit a through an external data input end, and the second data block is also input to the convolution circuit e through an external data input end. Therefore, the convolution circuit a and the convolution circuit e may respectively perform convolution operations on the first data block and the second data block.

In this way, the computing core 80 uses a data block as a minimum processing unit, and the computing core 80 may implement parallel execution of a plurality of data blocks in a same feature map, to improve computing efficiency.

Optionally, the computing core 80 may further include a hardware multi-thread control circuit 84. The convolution circuit 81 is configured to execute at least one hardware thread, where the at least one hardware thread includes a first hardware thread. The hardware multi-thread control circuit 84 is configured to: after the convolution circuit 81 obtains a third data block, control the convolution circuit 81 to execute the first hardware thread. The at least one hardware thread is in a one-to-one correspondence with convolution operations in different convolutional layers, and the third data block is a data block of a feature map of a convolutional layer corresponding to the first hardware thread.

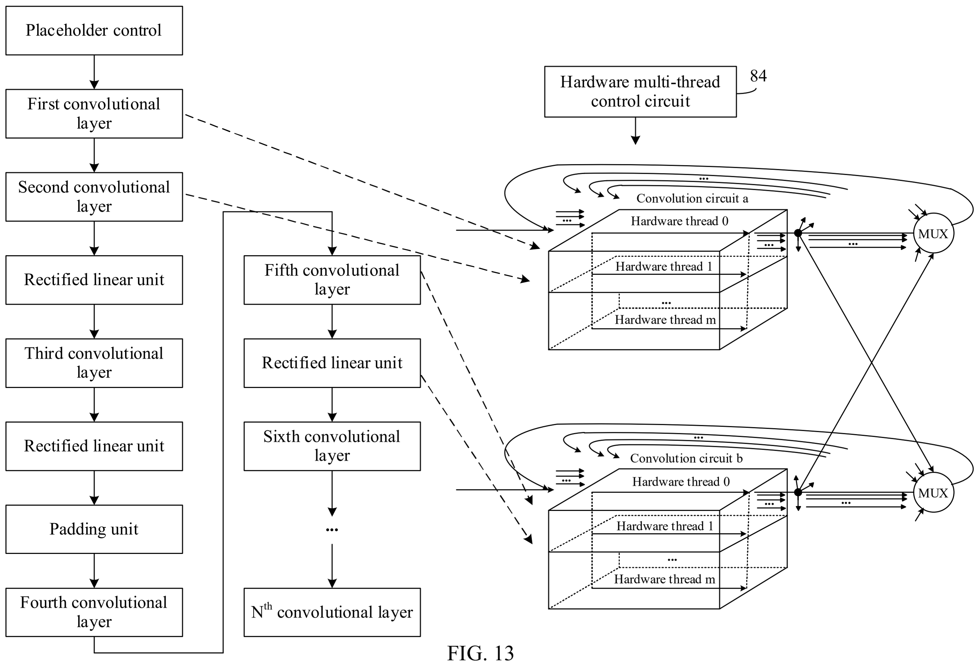

FIG. 13 is a mapping diagram of a computing core and an AI algorithm network according to an embodiment of this application. The AI algorithm network may include a placeholder (placeholder), a plurality of convolutional layers, a rectified linear unit (rectified linear unit, relu), a padding (padding) unit, and the like. The plurality of convolutional layers include a first convolutional layer to a N^{th} convolutional layer. A computing core 80 shown in FIG. 13 includes a convolution circuit a and a convolution circuit b. The convolution circuit a may execute a plurality of hardware threads, and the plurality of hardware threads may include a hardware thread 0 to a hardware thread m. A convolution operation performed in each convolutional layer of the AI algorithm network may be mapped to one hardware thread or a plurality of hardware threads in a convolution circuit. For example, a convolution operation performed in the first convolutional layer may be mapped to the hardware thread 0 in the convolution circuit a, and a convolution operation performed in the fifth convolutional layer may be mapped to the hardware thread 0 in the convolution circuit b. A convolution circuit 81 may multiplex a plurality of hardware threads in a time-division manner, and perform computation in different convolutional layers in a time-division manner. After each hardware thread is started, the convolution circuit 81 may process one data block, and then switch to another hardware thread to process computation at another convolutional layer. In an example, each convolutional layer of the AI algorithm network is separately mapped to each hardware thread of a convolution unit for execution. Weight parameters corresponding to convolutional layers executed by different hardware threads are switched. In this way, the convolution circuit 81 runs with full load as much as possible, to improve utilization efficiency of the convolution circuit 81.

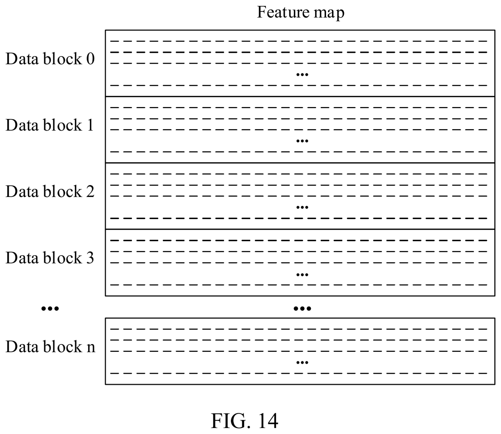

FIG. 14 is a diagram of data block division of a feature map according to an embodiment of this application. The feature map is divided into n data blocks, including a data block 0, a data block 1, ..., and a data block n. The data blocks =rows (rows)*i, where i is an integer greater than or equal to 1, that is, there may be a plurality of rows or one row of data blocks. The convolution circuit 81 performs convolution computing on one data block each time, and then switches to a next hardware thread to perform a convolution operation on a next data block. In other words, the convolution circuit 81 first executes a first hardware thread, and continues to execute a second hardware thread after the execution of the first hardware thread ends.

The hardware multi-thread control circuit 84 is further configured to: after the convolution circuit obtains a fourth data block, control the convolution circuit 81 to repeatedly execute the first hardware thread. The fourth data block is also a data block of the feature map of the convolutional layer corresponding to the first hardware thread.

For example, during mapping between an AI algorithm network and a hardware thread, convolution operations performed in a same convolutional layer may be mapped to different hardware threads. For example, a convolution operation performed in a first convolutional layer is mapped to the first hardware thread. It is assumed that a feature map of the first convolutional layer includes a third data block and a fourth data block. The third data block of the feature map of the first convolutional layer may be used as input data of the first hardware thread, and the fourth data block of the feature map of the first convolutional layer may also be used as input data of the first hardware thread.

The at least one hardware thread further includes a second hardware thread. The convolution circuit 81 includes an eighth convolution circuit. The hardware multi-thread control circuit 84 is further configured to: control the eighth convolution circuit to execute the first hardware thread; and control, when the first hardware thread is completed, the eighth convolution circuit to continue performing computation of the second hardware thread.

For example, during mapping between the AI algorithm network and the hardware thread, convolution operations performed in different convolutional layers may be mapped to different hardware threads. For example, the convolution operation performed in the first convolutional layer is mapped to the first hardware thread, and a data block of the feature map of the first convolutional layer is used as input data of the first hardware thread. A convolution operation performed in a second convolutional layer is mapped to the second hardware thread, and a data block of a feature map of the second convolutional layer is used as input data of the second hardware thread.

Optionally, the hardware multi-thread control circuit 84 is specifically configured to: when the first hardware thread is completed, determine whether the second hardware thread meets a switching condition. The switching condition includes that the convolution circuit 81 has obtained a data block of a feature map of a convolutional layer corresponding to the second hardware thread, memory space that corresponds to a data block for storing an output of the second hardware thread and that is in the convolution circuit 81 is empty, and the convolution circuit 81 is in an idle state. If the second hardware thread meets the switching condition, the convolution circuit 81 is controlled to continue performing the computation of the second hardware thread.

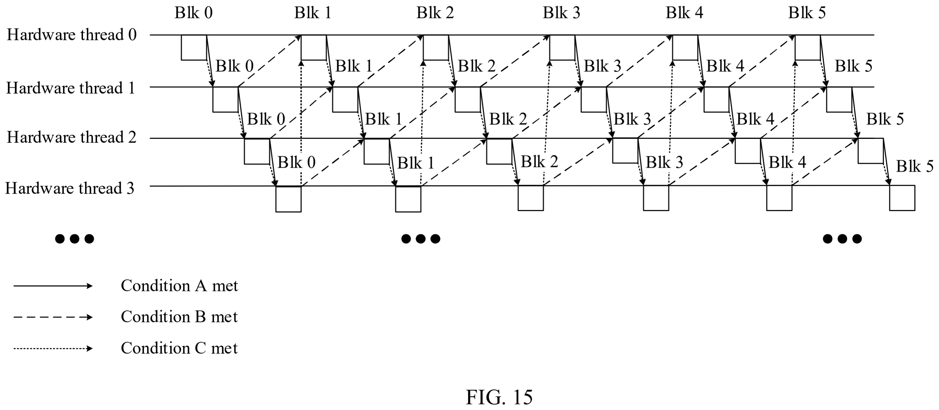

For example, the hardware multi-thread control circuit 84 may be configured to schedule a hardware thread. FIG. 15 is a time sequence diagram in which a hardware thread performs computation in different convolutional layers in a time-division manner according to an embodiment of this application. A data block is indicated by Blk. For example, a data block 0 is indicated by Blk 0. In addition, a condition A is that the convolution circuit in the switching condition has obtained a data block of a feature map of a convolutional layer corresponding to the second hardware thread. A condition B is that memory space that corresponds to a data block for storing an output of the second hardware thread and that is in the convolution circuit is empty. A condition C is that the convolution circuit is in an idle state. For the hardware thread 0, if the condition A and the condition C are met, a convolution operation is performed on the data block 0. After the convolution operation on the data block 0 is completed, if a hardware thread 1 meets the condition A and the condition C, the hardware thread 1 performs a convolution operation on the data block 0. By analogy, after a hardware thread 3 completes a convolution operation on the data block 0, if the hardware thread 0 meets the condition B, the hardware thread 0 continues to perform a convolution operation on a data block 1.

Further, the hardware multi-thread control circuit 84 is further configured to: after the second hardware thread meets the switching condition, control, based on a weight parameter and a priority of the second hardware thread, the convolution circuit 81 to continue performing the computation of the second hardware thread.

For example, in addition to the condition A, the condition B, and the condition C, the switching condition may further include a condition D and a condition F. The condition D is that the second hardware thread has obtained a corresponding weight parameter, and the condition F is that the second hardware thread has a highest priority. For example, if there are a plurality of second hardware threads that meet the condition A, the condition B, and the condition C, and the second hardware threads have priorities, a second hardware thread with a highest priority needs to be first processed, to improve efficiency of a computing core.

Optionally, the output end of each of the plurality of convolution circuits 81 is coupled to input ends of the plurality of multiplexers 82.

For example, a manner in which the output end of the convolution circuit 81 is coupled to the input end of the multiplexer 82 may be understood as a full-selection architecture. A convolution result of the current convolution circuit 81 may be transmitted to an input end of each convolution circuit 81, including the current convolution circuit 81, via the multiplexer 82. In other words, the convolution result of the current convolution circuit 81 may be selected by the multiplexer 82 and then input to the current convolution circuit 81 as input data of next-layer convolution.

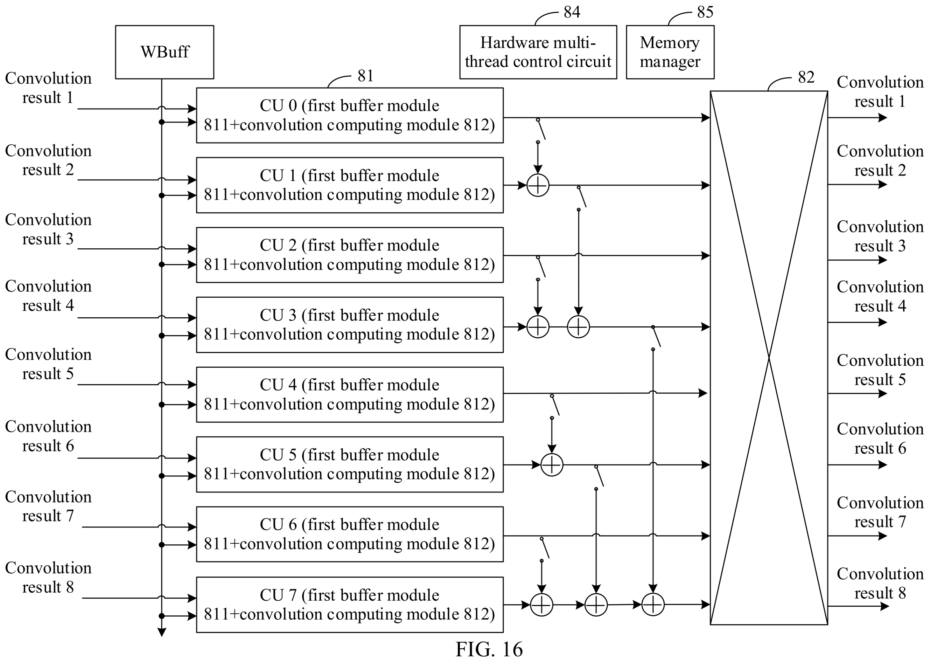

FIG. 16 shows an example of eight convolution circuits 81 and one multiplexer 82. A computing core may include the convolution circuits 81, the multiplexer 82, and a hardware multi-thread control circuit 84. The convolution circuit 81 may include a first buffer module 811 and a convolution computing module 812. The first buffer module 811 may be a buffer register (buffer). The first buffer module 811 is configured to buffer input data and a weight parameter of another convolution circuit. The convolution computing module 812 is configured to perform a convolution operation based on the input data and the weight parameter. The convolution circuit 81 may include a first input end and a second input end. The first input end is coupled to an output end of the multiplexer 82. The first input end of the convolution circuit 81 is configured to input a convolution result. The second input end is coupled to a buffer (indicated by WBuff in FIG. 16). The second input end of the convolution circuit 81 is configured to input a weight parameter, and the like.

In an example, when the convolution computing module 812 performs a convolution operation in a current convolutional layer, a convolution result of the convolution computing module 812 is selected by the multiplexer 82 and input to a first buffer module 811 of a convolution circuit 81 responsible for a next convolutional layer. Each first buffer module 811 stores input data and weight parameters corresponding to M hardware threads. The hardware multi-thread control circuit 84 is configured to control the convolution circuit 81 and the multiplexer 82. When a hardware thread meets a switching condition, the hardware multi-thread control circuit 84 is controlled to start the hardware thread for computation, and control a time sequence of the convolution circuit 81, to complete a process of starting, running, and ending. When a plurality of convolution circuits 81 execute input/output channels or execute a plurality of data blocks in parallel, the hardware multi-thread control circuit 84 controls the plurality of convolution circuits 81 at the same time.

In addition, the computing core 80 may further include a memory manager 85, and is configured to control the first buffer module 811, including controlling read/write control, a ring buffer (ring buffer), empty/full state determining, access conflict management, and the like of the first buffer module 811.

Optionally, the computing core 80 may include n convolution circuits, where n is an integer greater than 1. The computing core 80 further includes a switch 86 and n second buffer modules 87. The switch 86 includes n input ends and n output ends. Output ends of the n second buffer modules 87 are in a one-to-one correspondence with the n input ends of the switch. The n output ends of the switch are in a one-to-one correspondence with the n convolution circuits.

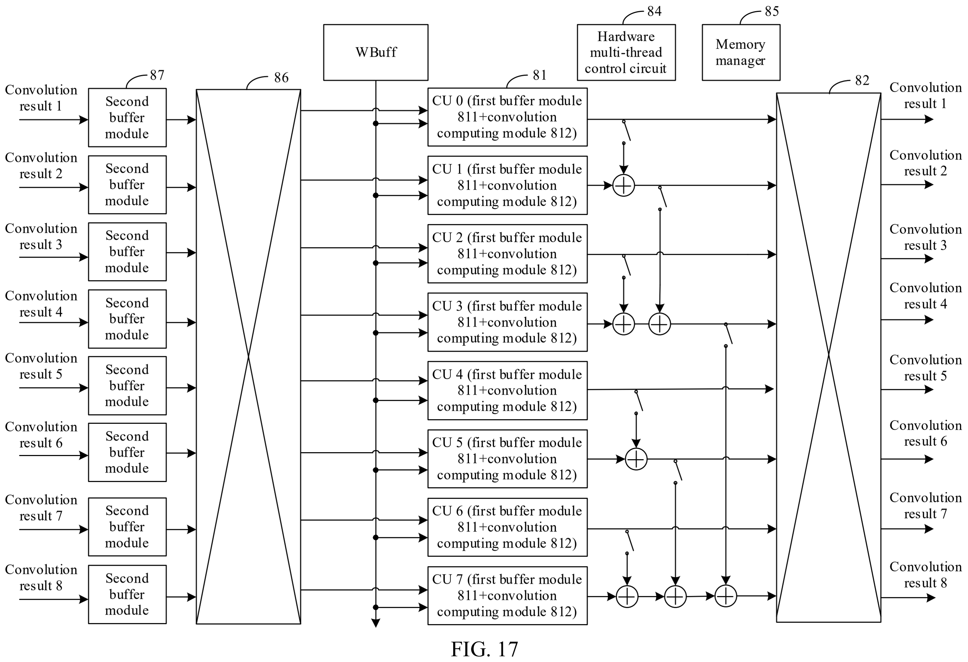

For example, FIG. 17 is a diagram of a structure of another computing core according to an embodiment of this application. FIG. 17 shows eight convolution circuits 81, one multiplexer 82, a hardware multi-thread control circuit 84, one switch 86, and eight second buffer modules 87. Compared with the full-selection architecture of the computing core in FIG. 16, the another computing core in this embodiment is additionally provided with the second buffer module 87 and the switch 86, to increase flexibility of transmitting a convolution result to the convolution circuit 81. For example, a convolution result 1 may be transmitted to any one of convolution circuits CU 0 to CU 7 through the switch 86.

The following describes a data processing method provided in an embodiment of this application with reference to the computing core shown above.

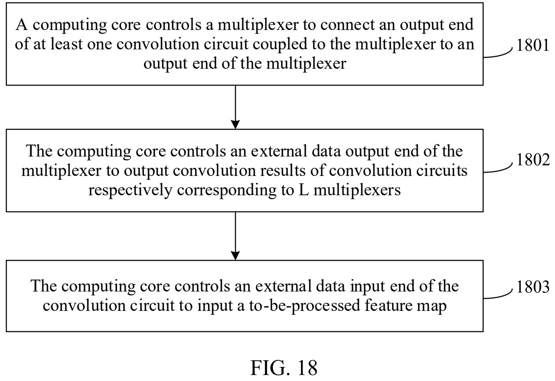

An embodiment of this application provides a data processing method. FIG. 18 is a flowchart of the data processing method according to an embodiment of this application. The method includes the following procedures.

Step 1801: A computing core controls a multiplexer to connect an output end of at least one convolution circuit coupled to the multiplexer to an output end of the multiplexer.

Step 1802: The computing core controls an external data output end of the multiplexer to output convolution results of convolution circuits respectively corresponding to L multiplexers.

Step 1803: The computing core controls an external data input end of the convolution circuit to input a to-be-processed feature map.

For example, compared with a matrix-type in-memory computing network structure, the computing core in this embodiment of this application can flexibly meet a requirement of the computing core for computing resources in different dimensions such as a network depth, a quantity of input and output channels, and a feature map size by using a selection function of the multiplexer. This improves computing resource utilization of the computing core, and reduces a circuit area and costs of a chip. For specific implementations of step 1801 to step 1803, refer to the foregoing descriptions based on FIG. 8. Details are not described herein again.

Optionally, to implement output channel extension of the computing core, the computing core controls a first multiplexer to connect an output end of a fifth convolution circuit to an output end of the first multiplexer, and controls a second multiplexer to connect the output end of the fifth convolution circuit to an output end of the second multiplexer. For a specific output channel extension manner, refer to the foregoing descriptions based on FIG. 11. Details are not described herein again.

Optionally, to save data access time, the method may further include: controlling, by the computing core, a first buffer module to buffer input data and a weight parameter of another convolution circuit, and controlling, based on the input data and the weight parameter, the convolution computing module to perform a convolution operation.

Optionally, to improve computing efficiency of the computing core, the computing core may execute different data blocks in a same feature map in parallel. In this case, the data processing method may further include: controlling, by the computing core, the multiplexer to transmit the first data block to the sixth convolution circuit at a first moment and transmit the second data block to the seventh convolution circuit at a second moment; and controlling, by the computing core, the sixth convolution circuit to start performing a convolution operation on the first data block at the first moment, and controlling the seventh convolution circuit to start performing a convolution operation on the second data block at the second moment. For a specific parallel execution manner, refer to the foregoing descriptions based on FIG. 12. Details are not described herein again.

Optionally, to improve utilization efficiency of the convolution circuit, the computing core may multiplex a plurality of hardware threads in a time-division manner. In this case, the data processing method may include: after the convolution circuit obtains a third data block, controlling the convolution circuit to execute the first hardware thread; and after the convolution circuit obtains a fourth data block, controlling the convolution circuit to repeatedly execute the first hardware thread. Alternatively, the data processing method may further include: The computing core controls the eighth convolution circuit to execute the first hardware thread, and controls, when the first hardware thread is completed, the eighth convolution circuit to continue performing computation of the second hardware thread. For a specific time-division multiplexing manner, refer to the foregoing description based on FIG. 15. Details are not described herein again.

Specifically, the time-division multiplexing manner is specifically: when the first hardware thread is completed, determining whether the second hardware thread meets a switching condition, where the switching condition includes that the eighth convolution circuit has obtained a data block of a feature map of a convolutional layer corresponding to the second hardware thread, a first buffer module that corresponds to a data block for storing an output of the second hardware thread and that is in the eighth convolution circuit is empty, and the eighth convolution circuit is in an idle state; and if the second hardware thread meets the switching condition, controlling the convolution circuit to continue performing the computation of the second hardware thread.

Further, the time-division multiplexing manner may further include: After the second hardware thread meets the switching condition, the computing core controls, based on a weight parameter and a priority of the second hardware thread, the hardware multi-thread control circuit to control the convolution circuit to continue performing the computation of the second hardware thread.

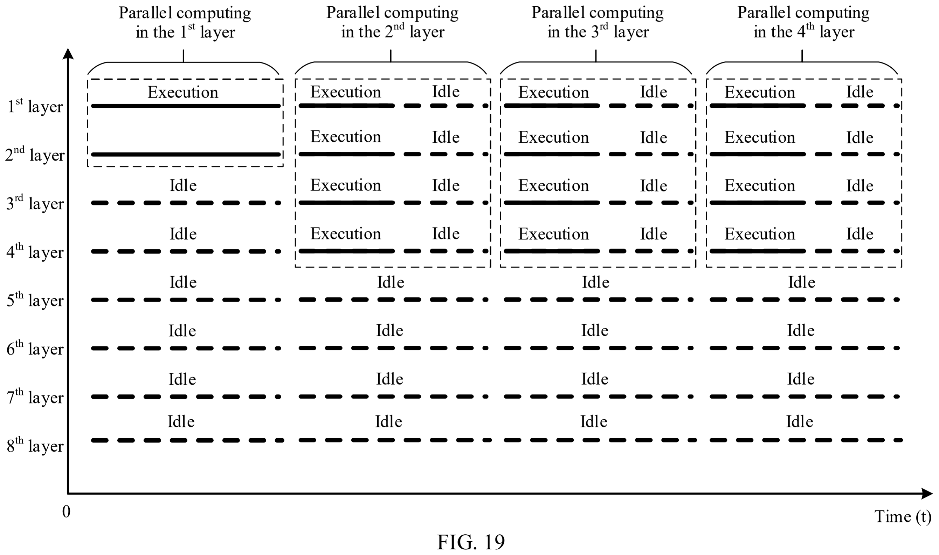

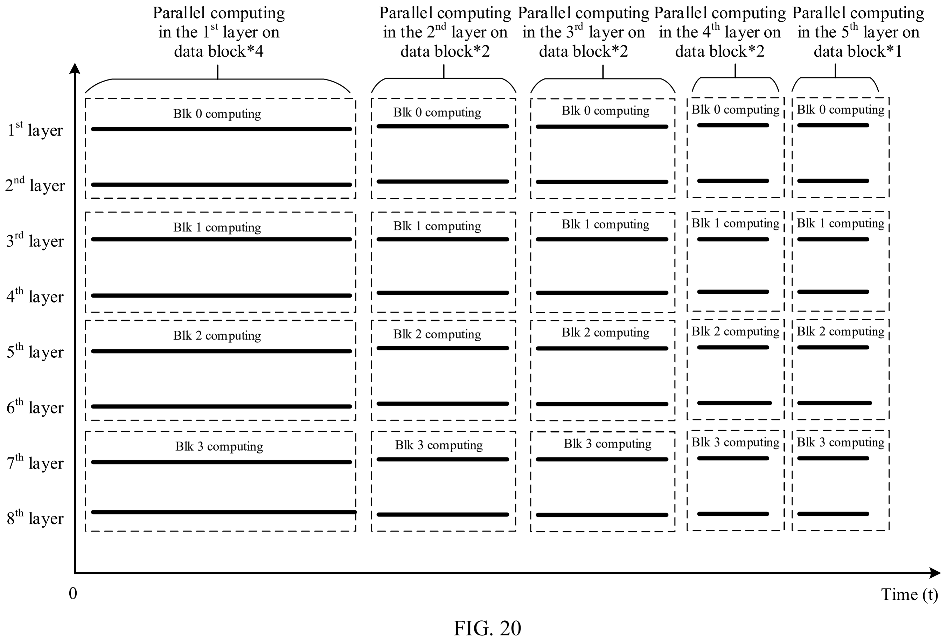

The foregoing data processing method is applied to the computing core. As shown in FIG. 19 and FIG. 20, FIG. 19 is a diagram of computing resource utilization of a network algorithm based on an in-memory computing architecture according to an embodiment of this application; and FIG. 20 is a diagram of computing resource utilization based on a computing core according to an embodiment of this application. The architecture based on in-memory computing includes eight convolution circuits. Each convolution circuit includes 16 input/output channels. The computing core includes eight convolution circuits. Each convolution circuit includes 16 input/output channels and 32 hardware threads. In addition, a data block of the computing core is a minimum processing unit. Convolution computing in all convolutional layers is performed first in an upper layer and then in a lower layer according to a convolutional network algorithm. This reduces a storage capacity of intermediate data. A data stream sequentially passes through different convolution units in the computing core, and is output from the computing core only at last. This greatly reduces data access power consumption, and reduces a processing delay.

It can be learned from FIG. 19 and FIG. 20 that computing resource utilization based on the computing core is higher than computing resource utilization of the network algorithm based on the in-memory computing architecture. For example, for a first convolutional layer, in the network algorithm based on the computing core, when four data blocks are computed at the first layer in parallel, all the eight convolution circuits are in an execution state. However, in the network algorithm based on the in-memory computing architecture, only two convolution circuits are in an execution state, and the remaining six convolution circuits are in an idle (idle) state.

An embodiment of this application further provides a chip. The chip includes a processor and a computing core. The computing core is electrically connected to a printed circuit board.

An embodiment of this application further provides an electronic device. The electronic device includes a printed circuit board and a computing core. The computing core is electrically connected to the printed circuit board.

It may be understood that, to implement the foregoing functions, the electronic device includes a corresponding hardware and/or software module for executing each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is caused to perform the foregoing related method steps, to implement the data processing method in the foregoing embodiments.

An embodiment of this application further provides a computer storage medium. The computer storage medium stores computer instructions. When the computer instructions are run on an electronic device, the electronic device is caused to perform the related method steps, to implement the data processing method in the foregoing embodiments.

An embodiment of this application further provides a computer program product. When the computer program product runs on a computer, the computer is caused to perform the foregoing related steps, to implement the data processing method performed by the electronic device in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions, and when the apparatus runs, the processor may execute the computer-executable instructions stored in the memory, so that the chip performs the data processing method performed by the electronic device in the foregoing method embodiments.

The electronic device, the computer storage medium, the computer program product, or the chip provided in embodiments is configured to perform the corresponding method provided above. Therefore, for beneficial effect that can be achieved, refer to beneficial effect of the corresponding method provided above. Details are not described herein again.

Based on the descriptions of the implementations, a person skilled in the art may understand that for the purpose of convenient and brief description, division into the functional modules is merely used as an example for description. In actual application, the functions may be allocated to different functional modules for completion according to a requirement. In other words, an inner structure of an apparatus is divided into different functional modules, to implement all or some of the functions described above.

In the several embodiments provided in this application, it should be understood that the disclosed apparatus and method may be implemented in other manners. For example, the described apparatus embodiment is merely an example. For example, division into modules or units is merely logical functional division and may be other division in actual implementations. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on a plurality of different places. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, for example, a USB flash drive, a removable hard disk drive, a read-only memory (read-only memory, ROM), a random access memory (random access memory, RAM), a magnetic disk, or an optical disc.

The foregoing content is merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A computing core, comprising a plurality of convolution circuits and a plurality of multiplexers, wherein the multiplexer comprises an output end and at least two input ends, the output end of the multiplexer is in a one-to-one correspondence with an input end of the convolution circuit, an output end of each of the plurality of convolution circuits is coupled to input ends of L multiplexers, L is an integer greater than or equal to 2, at least one of the L multiplexers further comprises an external data output end, and at least one of L convolution circuits corresponding to the L multiplexers further comprises an external data input end;
the multiplexer is configured to connect an output end of at least one convolution circuit coupled to the multiplexer to the output end of the multiplexer;
the external data output end of the multiplexer is configured to output convolution results of the convolution circuits respectively corresponding to the L multiplexers; and
the external data input end of the convolution circuit is configured to input a to-be-processed feature map.

2. The computing core according to claim 1, wherein the computing core further comprises a plurality of adders, the plurality of convolution circuits comprise a first convolution circuit and a second convolution circuit, a first input end of a first adder in the plurality of adders is coupled to an output end of the first convolution circuit, a second input end of the first adder is coupled to an output end of the second convolution circuit, and an output end of the first adder is coupled to the input ends of the L multiplexers.

3. The computing core according to claim 2, wherein the plurality of convolution circuits further comprise a third convolution circuit and a fourth convolution circuit, the plurality of adders further comprise a second adder and a third adder, a first input end of the second adder is coupled to an output end of the third convolution circuit, a second input end of the second adder is coupled to an output end of the fourth convolution circuit, an output end of the second adder is coupled to a first input end of the third adder, a second input end of the third adder is coupled to the output end of the first adder, and an output end of the third adder is coupled to the input ends of the L multiplexers.

4. The computing core according to claim 1, wherein the plurality of convolution circuits comprise a fifth convolution circuit, and the plurality of multiplexers comprise a first multiplexer and a second multiplexer;
the first multiplexer is configured to connect an output end of the fifth convolution circuit to an output end of the first multiplexer; and
the second multiplexer is configured to connect the output end of the fifth convolution circuit to an output end of the second multiplexer.

5. The computing core according to any one of claims 1 to 4, wherein the convolution circuit comprises a first buffer module and a convolution computing module;
the first buffer module is configured to buffer input data and a weight parameter of another convolution circuit; and
the convolution computing module is configured to perform a convolution operation based on the input data and the weight parameter.

6. The computing core according to any one of claims 1 to 5, wherein the plurality of convolution circuits further comprise a sixth convolution circuit and a seventh convolution circuit, input data of the external data input end of the plurality of convolution circuits comprises a first feature map, the first feature map comprises a first data block and a second data block, the multiplexer is further configured to: transmit the first data block to the sixth convolution circuit at a first moment, and transmit the second data block to the seventh convolution circuit at a second moment, the sixth convolution circuit is configured to start performing a convolution operation on the first data block at the first moment, and the seventh convolution circuit is configured to start performing a convolution operation on the second data block at the second moment.

7. The computing core according to any one of claims 1 to 5, wherein the computing core further comprises a hardware multi-thread control circuit, the convolution circuit is configured to execute at least one hardware thread, the at least one hardware thread comprises a first hardware thread, and the hardware multi-thread control circuit is configured to:
after the convolution circuit obtains a third data block, control the convolution circuit to execute the first hardware thread, wherein
the at least one hardware thread is in a one-to-one correspondence with convolution operations in different convolutional layers, and the third data block is a data block of a feature map of a convolutional layer corresponding to the first hardware thread.

8. The computing core according to claim 7, wherein the hardware multi-thread control circuit is further configured to:
after the convolution circuit obtains a fourth data block, control the convolution circuit to repeatedly execute the first hardware thread, wherein
the fourth data block is also a data block of the feature map of the convolutional layer corresponding to the first hardware thread.

9. The computing core according to claim 7, wherein the at least one hardware thread further comprises a second hardware thread, the convolution circuit comprises an eighth convolution circuit, and the hardware multi-thread control circuit is further configured to:
control the eighth convolution circuit to execute the first hardware thread; and
control, when the first hardware thread is completed, the eighth convolution circuit to continue performing computation of the second hardware thread.

10. The computing core according to claim 9, wherein the hardware multi-thread control circuit is specifically configured to: when the first hardware thread is completed, determine whether the second hardware thread meets a switching condition, wherein the switching condition comprises that the eighth convolution circuit has obtained a data block of a feature map of a convolutional layer corresponding to the second hardware thread, a first buffer module that corresponds to a data block for storing an output of the second hardware thread and that is in the eighth convolution circuit is empty, and the eighth convolution circuit is in an idle state; and if the second hardware thread meets the switching condition, control the convolution circuit to continue performing the computation of the second hardware thread.

11. The computing core according to claim 10, wherein the hardware multi-thread control circuit is further configured to: after the second hardware thread meets the switching condition, control, based on a weight parameter and a priority of the second hardware thread, the convolution circuit to continue performing the computation of the second hardware thread.

12. The computing core according to claim 1, wherein the output end of each of the plurality of convolution circuits is coupled to input ends of the plurality of multiplexers.

13. The computing core according to claim 1, wherein the computing core comprises n convolution circuits, n is an integer greater than 1, the computing core further comprises a switch and n second buffer modules, the switch comprises n input ends and n output ends, output ends of the n second buffer modules are in a one-to-one correspondence with the n input ends of the switch, and the n output ends of the switch are in a one-to-one correspondence with the n convolution circuits.

14. A data processing method, wherein the data processing method is applied to a computing core, the computing core comprises a plurality of convolution circuits and a plurality of multiplexers, the multiplexer comprises an output end and at least two input ends, the output end of the multiplexer is in a one-to-one correspondence with an input end of the convolution circuit, an output end of each of the plurality of convolution circuits is coupled to input ends of L multiplexers, L is an integer greater than or equal to 2, at least one of the L multiplexers further comprises an external data output end, and at least one of L convolution circuits corresponding to the L multiplexers further comprises an external data input end; and the method comprises:
controlling the multiplexer to connect an output end of at least one convolution circuit coupled to the multiplexer to the output end of the multiplexer;
controlling the external data output end of the multiplexer to output convolution results of the convolution circuits respectively corresponding to the L multiplexers; and
controlling the external data input end of the convolution circuit to input a to-be-processed feature map.

15. The method according to claim 14, wherein the computing core further comprises a plurality of adders, the plurality of convolution circuits comprise a first convolution circuit and a second convolution circuit, a first input end of a first adder in the plurality of adders is coupled to an output end of the first convolution circuit, a second input end of the first adder is coupled to an output end of the second convolution circuit, and an output end of the first adder is coupled to the input ends of the L multiplexers.

16. The method according to claim 15, wherein the plurality of convolution circuits further comprise a third convolution circuit and a fourth convolution circuit, the plurality of adders further comprise a second adder and a third adder, a first input end of the second adder is coupled to an output end of the third convolution circuit, a second input end of the second adder is coupled to an output end of the fourth convolution circuit, an output end of the second adder is coupled to a first input end of the third adder, a second input end of the third adder is coupled to the output end of the first adder, and an output end of the third adder is coupled to the input ends of the L multiplexers.

17. The method according to claim 14, wherein the plurality of convolution circuits comprise a fifth convolution circuit, and the plurality of multiplexers comprise a first multiplexer and a second multiplexer; and the method comprises:
controlling the first multiplexer to connect an output end of the fifth convolution circuit to an output end of the first multiplexer; and
controlling the second multiplexer to connect the output end of the fifth convolution circuit to an output end of the second multiplexer.

18. The method according to any one of claims 14 to 17, wherein the convolution circuit comprises a first buffer module and a convolution computing module; and the method further comprises:
controlling the first buffer module to buffer input data and a weight parameter of another convolution circuit; and
controlling the convolution computing module to perform a convolution operation based on the input data and the weight parameter.

19. The method according to any one of claims 14 to 18, wherein the plurality of convolution circuits further comprise a sixth convolution circuit and a seventh convolution circuit, input data of the plurality of convolution circuits comprises a first feature map, and the first feature map comprises a first data block and a second data block; and the method further comprises:
controlling the multiplexer to transmit the first data block to the sixth convolution circuit at a first moment and transmit the second data block to the seventh convolution circuit at a second moment; and
controlling the sixth convolution circuit to start performing a convolution operation on the first data block at the first moment, and controlling the seventh convolution circuit to start performing a convolution operation on the second data block at the second moment.

20. The method according to any one of claims 14 to 18, wherein the computing core further comprises a hardware multi-thread control circuit, the convolution circuit is configured to execute at least one hardware thread, and the at least one hardware thread comprises a first hardware thread; and the method further comprises:
after the convolution circuit obtains a third data block, controlling the hardware multi-thread control circuit to control the convolution circuit to execute the first hardware thread, wherein
the at least one hardware thread is in a one-to-one correspondence with convolution operations in different convolutional layers, and the third data block is a data block of a feature map of a convolutional layer corresponding to the first hardware thread.

21. The method according to claim 20, wherein the method further comprises:
after the convolution circuit obtains a fourth data block, controlling the hardware multi-thread control circuit to control the convolution circuit to repeatedly execute the first hardware thread, wherein
the fourth data block is also a data block of the feature map of the convolutional layer corresponding to the first hardware thread.

22. The method according to claim 20, wherein the at least one hardware thread further comprises a second hardware thread, and the convolution circuit comprises an eighth convolution circuit; and the method further comprises:
controlling the hardware multi-thread control circuit to control the eighth convolution circuit to execute the first hardware thread; and
controlling, when the first hardware thread is completed, the hardware multi-thread control circuit to control the eighth convolution circuit to continue performing computation of the second hardware thread.

23. The method according to claim 22, wherein controlling, when the first hardware thread is completed, the hardware multi-thread control circuit to control the eighth convolution circuit to continue performing the computation of the second hardware thread comprises: when the first hardware thread is completed, determining whether the second hardware thread meets a switching condition, wherein the switching condition comprises that the eighth convolution circuit has obtained a data block of a feature map of a convolutional layer corresponding to the second hardware thread, a first buffer module that corresponds to a data block for storing an output of the second hardware thread and that is in the eighth convolution circuit is empty, and the eighth convolution circuit is in an idle state; and controlling the hardware multi-thread control circuit to control the convolution circuit to continue performing the computation of the second hardware thread.

24. The method according to claim 23, wherein the method further comprises: after the second hardware thread meets the switching condition, controlling, based on a weight parameter and a priority of the second hardware thread, the hardware multi-thread control circuit to control the convolution circuit to continue performing the computation of the second hardware thread.

25. The method according to claim 14, wherein the output end of each of the plurality of convolution circuits is coupled to input ends of the plurality of multiplexers.

26. The method according to claim 14, wherein the computing core comprises n convolution circuits, n is an integer greater than 1, the computing core further comprises a switch and n second buffer modules, the switch comprises n input ends and n output ends, output ends of the n second buffer modules are in a one-to-one correspondence with the n input ends of the switch, and the n output ends of the switch are in a one-to-one correspondence with the n convolution circuits.

27. A chip, wherein the chip comprises a processor and the computing core according to any one of claims 1 to 13, and the computing core is electrically connected to the processor.

28. An electronic device, wherein the electronic device comprises a printed circuit board and the computing core according to any one of claims 1 to 13, and the computing core is electrically connected to the printed circuit board.

29. A computer-readable storage medium, comprising computer instructions, wherein when the computer instructions are run on an electronic device, the electronic device is caused to perform the method according to any one of claims 14 to 26.
